# EUROPÄISCHE PATENTSCHRIFT

(11) **EP 0 377 093 B1**
(45) Veröffentlichungstag und Bekanntmachung des Hinweises auf die Patenterteilung: **03.08.1994**
(21) Anmeldenummer: 89119942.4
(22) Anmeldetag: 27.10.1989
(51) Int. Cl.: H02G 3/16, H02G 3/08

(54) **Elektrische Installationseinheit zum Einbau in Verkleidungswandungen**
Electrical installation unit for flush-mounting in panels
Unité d'installation électrique pour le montage encastré dans des panneaux

(30) Priorität: 31.12.1988 DE 8816234 U
(43) Veröffentlichungstag der Anmeldung: 11.07.1990
(73) Patentinhaber: A. & H. Meyer GmbH Leuchten und Büroelektrik, 32694 Dörentrup (DE)
(72) Erfinder: Meyer, Horst, D-4926 Dörentrup-Humfeld (DE)
(74) Vertreter: Hanewinkel, Lorenz, Dipl.-Phys.

(56) Entgegenhaltungen:
- DE-A- 1 640 734
- DE-U- 8 805 882
- US-A- 4 758 687

## Beschreibung

Die Erfindung bezieht sich auf eine elektrische Installationseinheit gemäß dem Oberbegriff des Anspruchs 1.

Derartige Installationseinheiten werden in bekannter Weise für die Büroraumelektrifizierung eingesetzt, sind jedoch für die Wohraumelektrifizierung aufgrund der Verkabelungsausführung und der Festlegung in Verkleidungswandungen nicht geeignet.

Aufgabe der Erfindung ist es, eine nach der eingangs genannten Art aufgebaute Installationseinheit dahingehend zu verbessern, daß sie aufgrund einer besonderen Boxengestaltung eine einfache elektrische Verkabelung außerhalb der Verkleidungswandung mit den hinter der Verkleidungswandung verlaufenden elektrischen Leitungen und eine leichte Montage der verkabelten Installationseinheit in der Verkleidungswandung ermöglicht.

Diese Aufgabe wird erfindungsgemäß durch die kennzeichnenden Merkmale des Schutzanspruches 1 gelöst, wobei noch die in den Unteransprüchen aufgeführten Gestaltungsmerkmale vorteilhafte Weiterbildungen der Aufgabenlösung darstellen.

Die erfindungsgemäße elektrische Installationseinheit ist aufgrund der besonderen Gestaltung ihres Boxengehäuses mit einer angeformten Aufnahmekammer außerhalb der Verkleidungswandung elektrisch einfach zu verkabeln und danach sehr leicht in den Ausschnitt der Verkleidungswandung einzusetzen und an der Wandung zu befestigen.

Durch die zurückversetzte Aufnahmekammer sind im Boxenboden Freiräume geschaffen, in denen die für die elektrische Verkabelung vorgesehenen Anschlüsse und Kabel aufgenommen werden können, so daß diese eletrische Verbindung innerhalb der Grundformausdehnung der Box erfolgt, d.h., die elektrischen, hinter der Verkleidungswandung liegenden Kabel können aus dem Ausschnitt der Verkleidungswandung herausgeführt, dann mit den Anschluß- und Verbindungsstücken über Steckverbinder verbunden werden und dann kann die verkabelte Einheit in den Ausschnitt eingesetzt und an der Verkleidungswandung befestigt werden.

Die Einbaubox ist mit einer Durchgangsverdrahtung ausgestattet, durch die ein beliebiges Aneinanderreihen mehrerer Boxen möglich ist.

Diese Installationseinheit eignet sich insbesondere für die Wohnraumelektrifizierung und kann in Wohnmöbelplatten, in Paneelen, in Wohnwagen und in anderen verschiedenen Verkleidungen eingebaut werden.

Auf der Zeichnung sind Ausführungsbeispiele gemäß der Erfindung dargestellt, welche nachfolgend näher erläutert werden. Es zeigt:
- Fig. 1: eine perspektivische Ansicht einer Einbaubox,
- Fig. 2: einen Längsschnitt durch die in eine Verkleidungswandung eingesetzte Einbaubox mit elektrischen Einsätzen,
- Fig. 3 bis 6: Seiten- und Stirnansichten verschiedener Befestigungsarten der Einbaubox in der Verkleidungswandung,
- Fig. 7: eine schematische Unteransicht der Einbaubox.

Die elektrische Installationseinheit zum Einbau in Verkleidungswandungen (1) weist eine langgestreckte Einbaubox (2) auf, in der mehrere elektrische Einsätze (3) in Form von Steckdosen und/oder Steckern und/oder Sicherungen und/oder Kommunikationseinsätzen und elektrische Anschluß- und Verbindungsstücke (4), vorzugsweise buchsen- und stiftförmige Steckverbinder, für einen Netzanschluß und/oder eine Verkabelung angeordnet sind.

Die Einbaubox (2) ist mit einer gegenüber einem oder beiden Boxlängenenden zurückversetzten Aufnahmekammer (5) ausgestattet, in der die elektrischen Anschluß- und Verbindungsstücke (4) untergebracht sind.

Die Aufnahmekammer (5) ist an der der Zugangsseite für die elektrischen Einsätze (3) gegenüberliegenden Seite der Box (2) über den Boxenboden (2a) hinausragend einteilig angeformt oder an dem Boxenboden (2a) als separates Gehäuseteil durch Schrauben od. dgl. befestigt und hat in bevorzugter Weise dieselbe Breite wie die Einbaubox (2) und ist an dem einen oder beiden Längenenden um ein gewisses Maß gegenüber dem Boxenboden (2a) zurückversetzt, so daß in einem oder beiden Längenenden der Box (2) abgestufte Freiräume (6) für das Anschließen der Gegenstücke (4a) zu den Anschluß- und Verbindungsstücken (4) und deren elektrische Kabel (4b) geschaffen worden sind.

Die Einbaubox (2) besitzt an der geöffneten Zugangsseite für die elektrischen Einsätze (3) einen umlaufenden, nach außen vorstehenden Auflagerand (7), mit dem die Einbaubox (2) auf der Verkleidungswandung (1) aufliegt und darauf durch Senkkopfschrauben (9) befestigt wird; die Einbaubox (2) ragt dabei durch einen Ausschnitt (1a) der Verkleidungswandung (1) hindurch.

Auf dem Auflagerand (7) stützen sich auch die elektrischen Einsätze (3) ab und sind darauf durch Schrauben (10) befestigt.

Für die Schrauben (9, 10) sind in der Box (2) Löcher (11) ausgeformt.

Die Einsätze (3) werden von einem Abdeckrahmen (12) umfaßt, der vorzugsweise an den Einsätzen (3) verrastet gehalten ist und die Befestigungsschrauben (9) abdeckt.

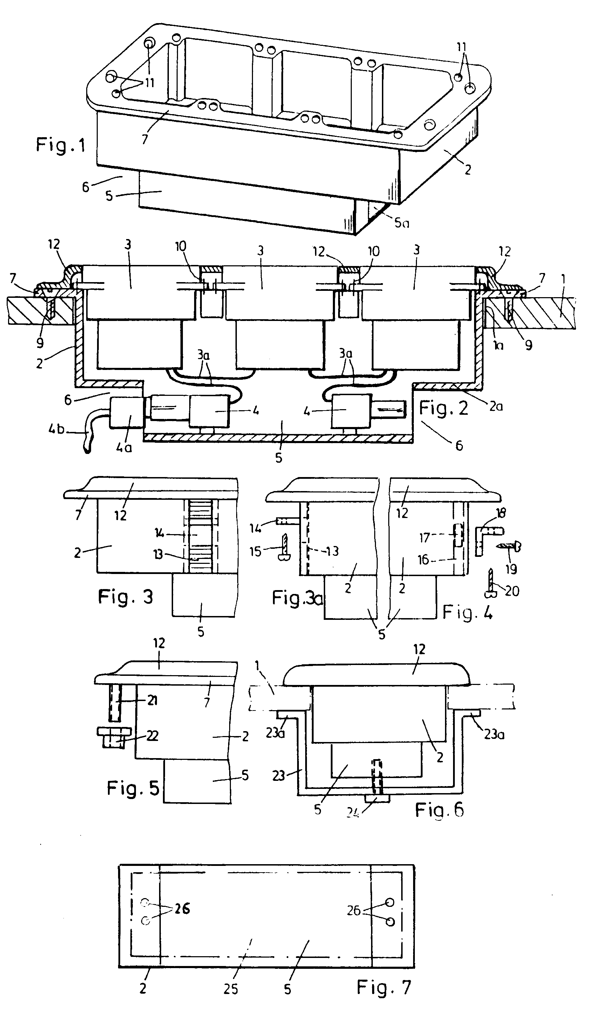

In Fig. 1 und 2 ist die Befestigung der Einbaubox (2) von oben dargestellt.

Die Verkabelung und elektrische Verbindung der Einbaubox (2) läßt sich außerhalb der Verkleidungswandung (1) vornehmen, indem die Kabel (4b) durch den Ausschnitt (1a) herausgezogen werden und an den Anschluß- und Verbindungsstücken (4) angeschlossen werden können. Dann kann die verkabelte Einbaubox (2) in den Ausschnitt (1a) eingesteckt und bei Auflage auf der Verkleidungswandung (1) durch die Schrauben (9) befestigt werden.

Die Einbaubox ist mit einer Durchgangsverdrahtung (3a) ausgestattet.

Für den Zugang zu den Anschluß- und Verbindungsstücken (4) ist die Kammer (5) mit heraustrennbaren oder herausnehmbaren Stirnwandteilen (5a) ausgestattet, die im Bedarfsfalle aus der Kammer (5) herausgenommen werden und somit einen Durchbruch in der Kammer (5) freigeben. Auch besteht die Möglichkeit, die angeformte oder separate, an der Box (2) befestigte Kammer (5) stirnseitig offen auszubilden.

In Fig. 3 bis 6 sind Befestigungsarten der Einbaubox (2) offenbart, bei der die Befestigung der Einbaubox (2) von unten, d.h., von der Rückseite der Verkleidungswandung (1) erfolgt.

Gemäß Fig. 3 und 3a sind in der Einbaubox (2) in Boxenhöhenrichtung verlaufende Rastnuten (13) angeformt, in die jeweils ein Winkel (14) verrastbar gehalten ist, der unter die Verkleidungswandung (1) drückt und somit eine Befestigung der Einbaubox (2) bei unterschiedlichen Wandstärken der Verkleidungswandung (1) ermöglicht.

Zusätzlich kann dieser Winkel (14) noch durch eine Schraube (15) an der Verkleidungswandung (1) festgelegt sein.

Fig. 4 zeigt eine ähnliche Befestigungsart, wobei in eingeformten Nuten (16) der Einbaubox (2) Kulissensteine (17) höhenverstellbar angebracht sind, an denen Winkel (18) durch Schrauben (19) befestig werden und dabei ist wiederum eine Einstellung der Winkel (18) auf unterschiedliche Plattenstärken der Verkleidungswandung (1) möglich.

Durch die Schrauben (19) werden die Winkel (18) mit den Kulissensteinen (17) in der Box (2) verspannt und die unter die Verkleidungswandung (1) angedrückten Winkel (18) lassen sich noch durch zusätzliche Schrauben (20) an der Verkleidundswandung (1) befestigen.

Fig. 5 zeigt an dem Auflagerand (7) nach unten hin angeformte Gewindebolzen (21), die durch Löcher der Verkleidungswandung (1) greifen und dann durch darauf geschraubte Muttern (22) eine Befestigung der Box (2) von unten her an der Verkleidungswandung (1) ermöglichen und dabei auch bei unterschiedlichen Plattenstärken der Verkleidungswandungen (1) eingesetzt werden können.

Gemäß Fig. 6 erfolgt die Befestigung der Box (2) durch die Box (2) außenseitig von unten her umgreifende U-Bügel (23), die mit nach außen gerichteten Flanschen (23a) unter die Verkleidungswandung (1) drücken und durch in die Kammer (5) eingreifende Schrauben (24) mit der Box (2) verbunden werden.

Durch diese U-Bügel (23) ist ebenfalls eine Boxenbefestigung an unterschiedlichen Stärken von Verkleidungswandungen (1) möglich.

Bei der Befestigung der Box (2) von unten her läßt sich der Abdeckrahmen (12) an die Einbaubox (2) einteilig anformen.

Wie Fig. 7 zeigt, kann die Einbaubox (2) in ihrem Boden mit einem lösbaren Deckel (25) ausgestattet sein, durch den ein Zugang zu der Kammer (5) und zum Boxeninnenraum für die Durchführung der Verkabelung, für eine Verdrahtungserweiterung und für die Einspeisung und den Abgang der elektrischen Leitungen ermöglicht wird.

Dieser Deckel (25) läßt sich durch Verrastungen (26) an der Box (2) lösbar festlegen, wobei diese Verrastungen (26) gleichzeitig Zugentlaster für die elektrischen Kabel bilden.

Das Boxengehäuse (2) ist im Boxenboden (2a) etwa um die Größe der Kammer (5) geöffnet.

## Patentansprüche

1. Elektrische Installationseinheit zum Einbau in Verkleidungswandungen, wie Möbelplatten, zur Büro- und Wohnraumelektrifizierung, mit einer langgestreckten, mehrere elektrische Einsätze in Form von Steckdosen und/oder Steckern und/oder Sicherungen und/oder Kommunikationseinsätzen und elektrische Steckverbinder für einen Netzanschluß und/oder eine Verkabelung aufnehmende Einbaubox, dadurch gekennzeichnet, daß die Einbaubox (2) mit einem mindestens gegenüber einem Box-Längenende zurückversetzt angeordneten, über den Boxenboden (2a) hinausragenden und eine Aufnahmekammer (5) für die elektrischen Steckverbinder (4) bildenden Gehäuseteil (5) ausgestattet ist, welches einstückig an den Boxenboden (2a) angeformt oder als separates Teil durch Schrauben oder dgl. lösbar an der Einbaubox (2) unter dem Boxenboden (2a) befestigt ist.

2. Installationseinheit nach Anspruch 1, dadurch gekennzeichnet, daß das Gehäuseteil dieselbe Breite wie die Einbaubox (2) aufweist, eine rechteckige Grundform hat, in der Boxenlänge an einem oder beiden Enden um ein gewisses Maß zurückversetzt ist und mindestens einen abgestuften Freiraum (6) zum Unterbringen der elektrischen Anschlußkabel (4b) und der mit den Steckverbindern (4) zusammenwirkenden Gegenstücken (4a) bildet.

3. Installationseinheit nach Anspruch 1 oder 2, dadurch gekennzeichnet, daß der Gehäuseteil (5) an seinen beiden Stirnenden jeweils ein heraustrennbares oder herausnehmbares, einen Zugang zu den Steckverbindern (4) ermöglichendes Wandteil (5a) hat.

4. Installationseinheit nach Anspruch 1 oder 2, dadurch gekennzeichnet, daß das Gehäuseteil (5) als stirnseitig offenes Teil ausgebildet ist.

5. Installationseinheit nach einem der Ansprüche 1 bis 4, dadurch gekennzeichnet, daß die Einbaubox (2) an ihrer geöffneten Zugangsseite einen umlaufenden, nach außen vorstehenden Auflagerand (7) zur Boxenfixierung an der die Box (2) in einem Ausschnitt (1a) aufnehmenden Verkleidungswandung (1) hat.

6. Installationseinheit nach einem der Ansprüche 1 bis 5, dadurch gekennzeichnet, daß die Einbaubox (2) im Boden (2a) und dem Gehäuseteil (5) einen lösbaren Deckel (25) hat, der durch gleichzeitig Zugentlaster für die elektrischen Kabel bildende Verrastungen (26) an der Box (2) gehalten ist.

7. Installationseinheit nach einem der Ansprüche 1 bis 6, dadurch gekennzeichnet, daß die Einbaubox (2) durch den Auflagerand (7) durchfassende Schrauben (9) von der Frontseite der Verkleidungswandung (1) her in der Verkleidungswandung (1) befestigt und der Auflagerand (7) sowie die Einsätze (3) durch einen verrastbaren Abdeckrahmen (12) umfaßt bzw. überdeckt sind.

8. Installationseinheit nach einem der Ansprüche 1 bis 7, dadurch gekennzeichnet, daß die Einbaubox (2) von der Rückseite der Verkleidungswandung (1) her durch auf unterschiedliche Stärken der Verkleidungswandung (1) einstellbare Befestigungsmittel, wie in Rastnuten (13) verrasteten Winkeln (14), Schraubwinkel (18), angeformten Gewindebolzen (21) mit Muttern (22) oder U-förmige, die Box (2) übergreifende Bügel (23) mit in die Box (2) einfassenden Schrauben (24) festlegbar ist.

## Claims

1. Electrical wiring unit for installation in wall panelling, for example furniture panels, to make electricity available in office and living accommodation, comprising an elongate mounting box which accommodates a plurality of electrical inserts in the form of sockets and/or plugs and/or fuses and/or communication inserts and electrical connectors for connection to a power supply and/or cabling,
characterised in that the mounting box (2) is equipped with a casing part (5) which is set back at least with respect to one longitudinal end of the box, juts out past the floor (2a) of the box, and forms a compartment (5) to receive the electrical connectors (4), said casing part (5) being formed integrally on the floor (2a) of the box or releasably fastened to the mounting box (2), using screws or the like, as a self-contained part (2) beneath the floor (2a) of the box.

2. Wiring unit according to claim 1, characterised in that the casing part has the same width as the mounting box (2), is basically rectangular in shape, is set back at one or both ends by a certain amount of the box length, and forms at least one stepped space (6) to accommodate the electric connection cables (4b) and the mating components (4a) which cooperate with the connectors (4).

3. Wiring unit according to claim 1 or 2, characterised in that on each of its end faces the casing part (5) has a wall section (5a) which can be removed or taken out to provide access to the connectors (4).

4. Wiring unit according to claim 1 or 2, characterised in that the casing part (5) is open at the front end.

5. Wiring unit according to any of claims 1 to 4, characterised in that around its open access side the mounting box (2) has an outward-projecting support rim (7) for attaching the box to the wall panelling (1), a cut-out (1a) in which receives the box (2).

6. Wiring unit according to any of claims 1 to 5, characterised in that in the floor (2a) and casing part (5) the mounting box (2) has a detachable cover (25) held on the box (2) by latches (26) which at the same time act as strain relievers for the electric cables.

7. Wiring unit according to any of claims 1 to 6, characterised in that the mounting box (2) is fixed into the wall panelling (1), from the front thereof, by screws (9) which pass through the support rim (7), and both the support rim (7) and the inserts (3) are covered or masked by a latchable cover frame (12).

8. Wiring unit according to any of claims 1 to 7, characterised in that the mounting box (2) can be attached from the rear of the wall panelling (1) by fasteners adapted to be adjusted to different thicknesses of wall panelling (1), for instance brackets (14) latching in locating slots (13), right-angle screws (18), integral screw bolts (21) with nuts (22), or U-shaped stirrups (23) which engage over the box (2) and have screws (24) which bite into the box (2).

## Revendications

1. Unité d'installation électrique pour le montage encastré dans des panneaux, tels que panneaux de meubles, pour l'électrification de bureaux et de locaux d'habitation, comprenant un boîtier allongé pour montage encastré, accueillant plusieurs inserts électriques, sous forme de prises de courant mâles et/ou femmelles et/ou des fusibles et/ou des inserts de communication et des connecteurs multibroches pour le branchement au réseau et/ou un câblage,
caractérisée en ce que
le boitier pour montage encastré (2) est équipé d'une pièce (5) décalée, en retrait par rapport à, au moins, une extrémité longitudinale du boîtier et faisant saillie au-dessus du fond (2a) du boîtier, laquelle forme une chambre de réception (5), formée, d'une pièce, à partir du fond (2a) du boîtier ou conçue comme pièce séparée, fixée de façon amovible sous le fond (2a) du boîtier (2) à l'aide de vis ou d'autres fixations analogues.

2. Unité d'installation électrique pour le montage encastré dans des panneaux selon revendication 1,
caractérisée en ce que
la chambre de réception présente la même largeur que le boîtier pour montage encastré (2) et une forme de base rectangulaire, est décalée, en retrait d'une certaine dimension, à une ou aux deux extrémités, dans le sens longitudinal du boîtier, et forme, au moins, un espace dégradé (6) destiné au logement des câbles de raccordement électriques (4b) et des pièces correspondantes (4a) coopérant avec les éléments électriques de branchement et de connexion (4).

3. Unité d'installation électrique pour le montage encastré dans des panneaux selon revendication 1 ou 2,.
caractérisée en ce que
chacune des deux parties frontales de la pièce (5) est pourvue d'une paroi (5a) amovible ou séparable, permettant l'accès aux broches multiples (4).

4. Unité d'installation électrique pour le montage encastré dans des panneaux selon revendication 1 ou 2,
caractérisée en ce que
la pièce (5) est conçue sous forme de pièce ouverte frontalement.

5. Unité d'installation électrique pour le montage encastré dans des panneaux selon l'une des revendications 1 à 4,
caractérisée en ce que
le boîtier pour montage encastré (2) est pourvu, sur son côté d'accès ouvert, d'un bord d'appui (7), faisant saillie vers l'extérieur, destiné à la fixation du boîtier au panneau (1), dans une découpe (1a) prévue à cette fin dans ce dernier.

6. Unité d'installation électrique pour le montage encastré dans des panneaux selon l'une des revendications 1 à 5,
caractérisée en ce que
le boîtier pour montage encastré (2) est équipé, dans le fond (2a) et la pièce (5), d'un couvercle amovible (25), qui est maintenu au boitier (2) à l'aide d'enclenchements (26), qui servent, simultanément, de décharges de traction pour les câbles électriques.

7. Unité d'installation électrique pour le montage encastré dans des panneaux selon l'une des revendications 1 à 6,
caractérisée en ce que
le boîtier pour montage encastré (2) est fixé dans le panneau de revêtement (1), à partir de la partie frontale de celui-ci, à l'aide de vis (9) traversant le bord d'appui (7), et que le bord d'appui (7), ainsi que les inserts (3) sont tenus embrassés ou recouverts par un cadre de couverture (12) enclenchable.

8. Unité d'installation électrique pour le montage encastré dans des panneaux selon l'une des revendications 1 à 7,
caractérisée en ce que
le boîtier pour montage encastré (2) peut être fixé, à partir de l'arrière du panneau (1), à l'aide de dispositifs de fixation adaptables aux différentes épaisseurs de panneaux (1), tels que rainures d'enclenchement (13), cornières enclenchables (14), cornières à vis (18) boulons filetés (21) avec écrous (22) ou étriers en forme de U (23) saisissant le boîtier (2), avec vis (24) mordant dans le boîtier (2).
